Europäisches Patentamt

European Patent Office

Office européen des brevets

(11) Veröffentlichungsnummer: **0 384 216**
**A1**

# EUROPÄISCHE PATENTANMELDUNG

(21) Anmeldenummer: 90102370.5

(22) Anmeldetag: 07.02.90

(51) Int. Cl.⁵: **F02B 61/00, F02B 67/00, F16B 43/02**

(30) Priorität: 22.02.89 DE 8902070 U

(43) Veröffentlichungstag der Anmeldung:
29.08.90 Patentblatt 90/35

(84) Benannte Vertragsstaaten:
**DE FR GB IT**

(71) Anmelder: **Adam Opel Aktiengesellschaft**
**Bahnhofsplatz 1 Postfach 17 10**
**D-6090 Rüsselsheim(DE)**

(72) Erfinder: **Heimer, Karl-Heinz, Dipl.-Ing.**
**Am Mittelpfad 85**
**D-6097 Trebur 2(DE)**

(74) Vertreter: **Bergerin, Ralf, Dipl.-Ing. et al**
**Adam Opel Aktiengesellschaft Bahnhofplatz**
**1 Postfach 17 10**
**D-6090 Rüsselsheim(DE)**

(54) Stütze zum Verbinden zweier zueinander bewegbarer Aggregate.

(57) Zum Verbinden zweier zueinander bewegbarer Aggregate, insbesondere zum Verbinden eines Motorzusatzaggregates mit einem Verbrennungsmotor, ist eine Stütze vorgesehen, die im Bereich jedes Befindungspunktes zwischen dem Kopf (13) des jeweiligen Befestigungselementes (9, 10) und der Stütze sowie der Stütze und dem jeweiligen Aggregat jeweils ein an der Stütze anliegendes Kugelsegment (17, 17') und eine am Kopf (13) bzw. dem Aggregat (7, 8) anliegende Kugelpfanne (14, 14') aufweist. Hierdurch werden verschiedene Stellungen von Verbrennungsmotor und Motorzusatzaggregat zueinander durch Kompensation eines gewissen Schwenkwinkels ermöglicht.

FIG.1

EP 0 384 216 A1

## Stütze zum Verbinden zweier zueinander bewegbarer Aggregate

Die Erfindung betrifft eine Stütze zum Verbinden zweier zueinander bewegbare Aggregate, insbesondere zum Verbinden eines Motorzusatzaggregates mit einem Verbrennungsmotor, wobei die Stütze zur Aufnahme von mit den Aggregaten verbindbaren Befestigungselementen im Bereich der Stützenbefestigungspunkte mit Ausnehmungen versehen und zwischen einem Kopf des jeweiligen Befestigungselements und dem zugeordneten Aggregat verspannbar ist.

Eine Stütze der genannten Art findet insbesondere bei riemengetriebenen Motorzusatzaggregaten Verwendung, die direkt oder indirekt mit dem Verbrennungsmotor schwenkbar verbunden sind. Sie ermöglicht damit verschiedene Stellungen des Motorzusatzaggregates, die sich durch das Schwenken beim Keilriemennachspannen ergeben, abzudecken und muß hierbei einen gewissen Schwenkwinkel und eine Abstandsänderung kompensieren.

In der Vergangenheit bevorzugte man bei Motorhilfsaggregaten eine gedämpfte Befestigung am Verbrennungsmotor, beispielsweise mittels Elastomerbüchsen. Um die bei derartigen elastischen Lagern bei bestimmten Motordrehzahlen pro Minute auftretenden Schwingungsbeschleunigungen auf einen zulässigen Wert zu reduzieren, geht man in jüngster Zeit verstärkt zu einer starren Lagerung der Motorzusatzaggregate über, insbesondere zu einer starren Befestigung des Generators.

Es ist Aufgabe der vorliegenden Erfindung, eine Stütze der genannten Art zu schaffen, die kompakt und steif ausgebildet ist und verschiedene Stellungen von Verbrennungsmotor und Motorzusatzaggregat zueinander durch Kompensation eines gewissen Schwenkwinkels und einer Abstandsänderung ermöglicht.

Gelöst wird die Aufgabe dadurch, daß die Stütze im Bereich jedes Befestigungspunktes zwischen dem Kopf des jeweiligen Befestigungselementes und der Stütze sowie der Stütze und dem jeweiligen Aggregat jeweils ein an der Stütze anliegendes Kugelsegment und eine am Kopf bzw. dem Aggregat anliegende Kugelpfanne aufweist, wobei das jeweilige Kugelsegment auf seiner der zugeordneten Kugelpfanne zugewandten Seite mit einer zu dieser gerichteten Wölbung, die Kugelpfanne mit einer entsprechenden von dem zugeordneten Kugelsegment weggerichteten Wölbung und die Kugelsegmente und die Kugelpfanne mit Ausnehmungen zur Aufnahme des jeweiligen Befestigungselementes versehen sind, sowie die Ausnehmungen in den Kugelsegmenten größer sind als die Stärke des diese durchsetzenden Teiles des jeweiligen Befestigungselementes und die Stützenausnehmung mindestens eines Stützenbefestigungspunktes in deren Längsrichtung größer ist als die Stärke des diese durchsetzenden Teiles des jeweiligen Befestigungselementes.

Aufgrund des Zusammenwirkens der jeweiligen Kugelsegmente mit den Kugelpfannen ermöglicht die erfindungsgemäße Stütze zunächst einen Winkelausgleich der jeweils zueinander bewegbaren Aggregate. Die Kugelsegmente werden bei einer Verschwenkung der Stütze zwischen den Kugelpfannen entsprechend verschwenkt, wobei aufgrund der Abmessungen der Ausnehmungen in den Kugelsegmenten, die von dem jeweiligen Befestigungselement durchsetzt werden, die Schwenkbewegung ungehindert vonstatten gehen kann. Andererseits erfolgt die aufgrund der Schwenkbewegung notwendig werdende Längenkompensation durch die besondere Ausgestaltung der im Bereich des mindestens einen Stützenbefestigungspunktes befindlichen Stützenausnehmung, die in deren Längsrichtung größere Abmessungen aufweist als die Stärke des diese durchsetzenden Teiles des jeweiligen Befestigungselementes.

Durch die vorbeschriebene Ausgestaltung der erfindungsgemäßen Stütze lassen sich zwei beliebige, zueinander bewegbare Aggregate innerhalb eines definierten Schwenkbereiches miteinander verbinden. Im Sinne der Erfindung ist insbesondere an die Verbindung eines direkt oder indirekt am Verbrennungsmotor schwenkbar befestigten Motorzusatzaggregates, wie Generator,P/S-Pumpe, A/C-Kompressor usw. gedacht, unter einer indirekten Verbindung mit dem Verbrennungsmotor soll dabei beispielsweise eine Verbindung des Motorzusatzaggregates mit dem Saugrohr usw. verstanden werden. Die erfindungsgemäße Stütze dient dem Zweck, das Motorzusatzaggregat zusätzlich axial abzustützen, im übrigen ist das Motorzusatzaggregat direkt oder indirekt schwenkbar mit dem Verbrennungsmotor verbunden.

Aufgrund der erfindungsgemäßen Gestaltung der Stütze gleiten die Kugelsegmente bei einer Verschwenkung des Motorzusatzaggregates in axialer Richtung der Stütze. Der Gleitweg ist dabei abhängig vom gewählten Kugelradius und der Winkelveränderung. Um die Stütze kompakt ausbilden zu können, sieht eine besondere Ausführungsform der Erfindung vor, daß der Kugelradius der jeweiligen Kugelsegmente größer ist als der Abstand der Kugelscheitel von dem den Kugelsegmenten zugeordneten Stützenbereich. Vorteilhaft sollten die den gewölbten Flächen der Kugelsegmente abgewandten Flächen dieser Teile eben ausgebildet sein, wobei die Ausnehmungen dieser Teile die jeweiligen gewölbten und ebenen Flächen senkrecht durchsetzen. Darüber hinaus wird es als vorteilhaft angesehen, wenn die Kugelsegmente mit sich in Richtung der zugeordneten Kugelpfannen konisch erweiternden Ausnehmungen versehen sind, die aufgrund deren Konizität dann gerade eine Schwenkbewegung der Stütze und damit der an dieser anliegenden Kugelsegmente bzw. des die die jeweiligen Kugelsegmente durchsetzenden Befestigungselemente ermöglichen. Entsprechend sollte die Stützenausnehmung im Bereich des mindestens einen Stützenbefestigungspunktes als Langloch ausgebildet sei, eine solche Ausbildung der Ausnehmung trägt dem Umstand, daß bei einer Schwenkbewegung des Motorzusatzaggregates die Stütze im Bereich dieses Stützenbefestigungspunktes in Axialrichtung verschoben wird, optimal Rechnung.

Eine besonders günstige Einleitung der Stützkräfte vom Motorzusatzaggregat in den Verbrennungsmotor ist dann gewährleistet, wenn die Stütze im Bereich beider die jeweiligen Ausnehmungen aufnehmenden Enden mit Abwinklungen versehen sind, wobei eine der Abwinklungen mit dem Stützenmittelteil vorteilhaft einen Winkel von etwa 90 bis 110°, insbesondere 100° und die andere Abwinklung einen Winkel von vorteilhaft 160 bis 170°, insbesondere 170° einschließen sollte und die beiden Abwinklungen der Stütze zweckmäßig gegensinnig gerichtet sind.

Weitere Merkmale der Erfindung sind in der Beschreibung der Figuren dargestellt, wobei bemerkt wird, daß alle Einzelmerkmale und alle Kombinationen von Einzelmerkmalen erfindungswesentlich sind.

In den Figuren ist die Erfindung an einer Ausführungsform beispielsweise dargestellt, ohne auf diese beschränkt zu sein. Es stellt dar:

Figur 1 die Verbindung zweier Aggregate mittels der erfindungsgemäßen Stütze dargestellt in einer Montageposition und einer ausgestellten Position,

Figur 2 eine Detaildarstellung der Stütze im Bereich eines Stützenbefestigungspunktes bei nicht verschwenkter Stütze und bezüglich deren Mittelpunkte um ein bestimmtes Maß versetzter Kugelsegmente,

Figur 3 eine Darstellung gemäß Figur 2 bei verschwenkter Stütze und

Figur 4 eine Darstellung der Stütze im Bereich eines Stützenbefestigungspunktes, ähnlich der Darstellung in Figur 2 bei nicht verschwenkter Stütze, jedoch in einer Ausführungsform, bei der die Kugelsegmentmittelpunkte nicht versetzt sind.

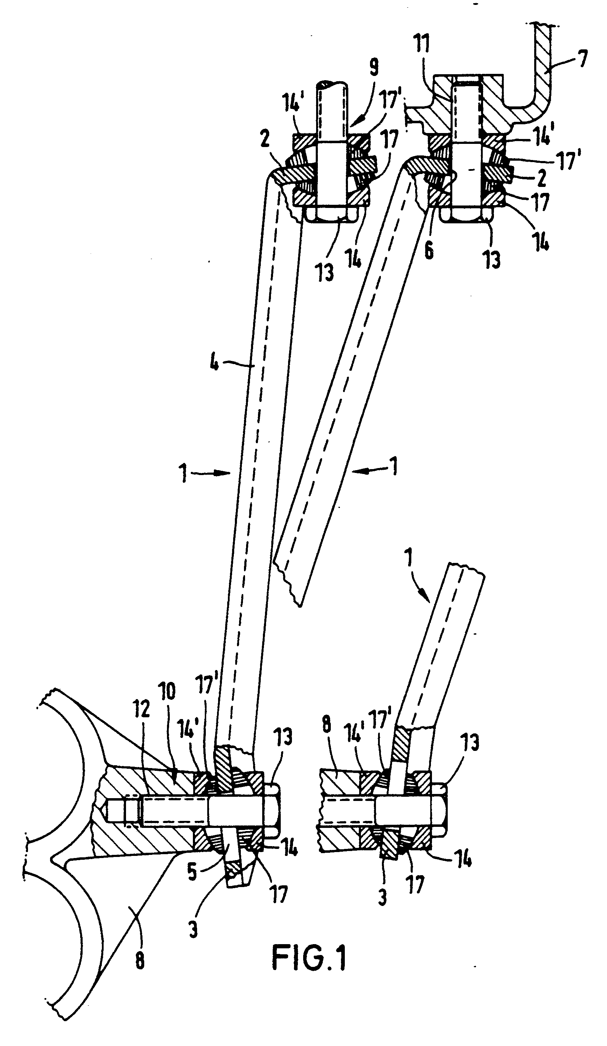

Die Figur 1 zeigt eine Stütze 1 , die im Bereich ihrer beiden Enden mit Abwinklungen 2 und 3 versehen ist. Die Abwinklung 2 bildet mit einem Stützenmittelteil 4 einen Winkel von 100°, die Abwinklung 3 mit dem Stützenmittelteil 4 einen Winkel von 170°, beide Abwinklungen 2 und 3 sind gegensinnig gerichtet. Die Abwinklung 3 weist ein sich in Längsrichtung der Stütze 1 erstreckendes Langloch 5 auf, während die Abwinklung 2 mit einer üblichen kreisförmigen Bohrung 6 versehen ist.

Die erfindungsgemäße Stütze 1 dient dem zusätzlichen Abstützen eines nur für einen Teil eines Gehäuses 7 gezeigten Generators an einem gleichfalls nur teilweise dargestellten Saugrohr 8 eines nicht gezeigten Verbrennungsmotors. Der Generator ist in nicht näher dargestellter Art und Weise schwenkbar mit dem Verbrennungsmotor verbunden und wird über einen gleichfalls nicht näher dargestellten Riementrieb vom Verbrennungsmotor angetrieben, die erfindungsgemäße Stütze 1 dient in diesem Zusammenhang dem Zweck, die verschiedenen Generatorstellungen, die sich durch das Schwenken des Generators beim Keilrimennachstellen ergeben, abzudecken.

Im Detail betrachtet erfolgt die Befestigung der Stütze 1 mit dem Generatorgehäuse 7 und dem Saugrohr 8 mittels zweier Schrauben 9 und 10, die Schraube 9 durchsetzt mit Spiel die Bohrung 6 der Abwinklung 2 und ist in eine Gewindebohrung 11 im Generatorgehäuse 7 eingeschraubt, die Schraube 10 durchsetzt das Langloch 5 der Abwinklung 3 und ist in eine Gewindebohrung 12 des Saugrohres 8 eingeschraubt. Darüber hinaus durchsetzt die Schraube 9 von deren Schraubenkopf 13 ausgehend eine erste Kugelpfanne 14, die mit einem ebenen Abschnitt 15 am Schraubenkopf 13 anliegt und die auf ihrer dem ebenen Abschnitt 15 abgewandten Seite mit einer zum Schraubenkopf 13, das heißt nach innen gerichteten Kugelwölbung 16 versehen ist, ferner ein erstes Kugelsegment 17, dessen Kugelwölbung 18 in Anlage mit der Kugelwölbung 16 der Kugelpfanne 14 gelangt und dessen der Kugelwölbung 18 abgewandte, ebene Fläche 19 an einer ebenen Seite 20 der als Platte ausgebildeten Abwinklung 2 anliegt. Die Schraube 9 durchsetzt schließlich ein weiteres Kugelsegment 17′ und eine mit dieser zusammenwirkende Kugelpfanne 14′ , die Kugelpfannen 14 und 14′ sowie die Kugelsegmente 17 und 17′ sind bezüglich der parallel zur ebenen Seite 20 der Abwinklung 2 verlaufenden Mittelebene 21 symmetrisch angeordnet, so daß sich eine Anlage des ebenen Abschnittes 15′ der Kugelpfanne 14′ am Gehäuse 7 des Generators ergibt, ferner ein Zusammenwirken der Kugelwölbungen 16′ und 18′ von Kugelpfanne 14′ und Kugelsegment 17′, schließlich liegt die ebene Fläche 19′ des Kugel segmentes 17′ an der ebenen Fläche 20′ der Abwinklung 2 an.

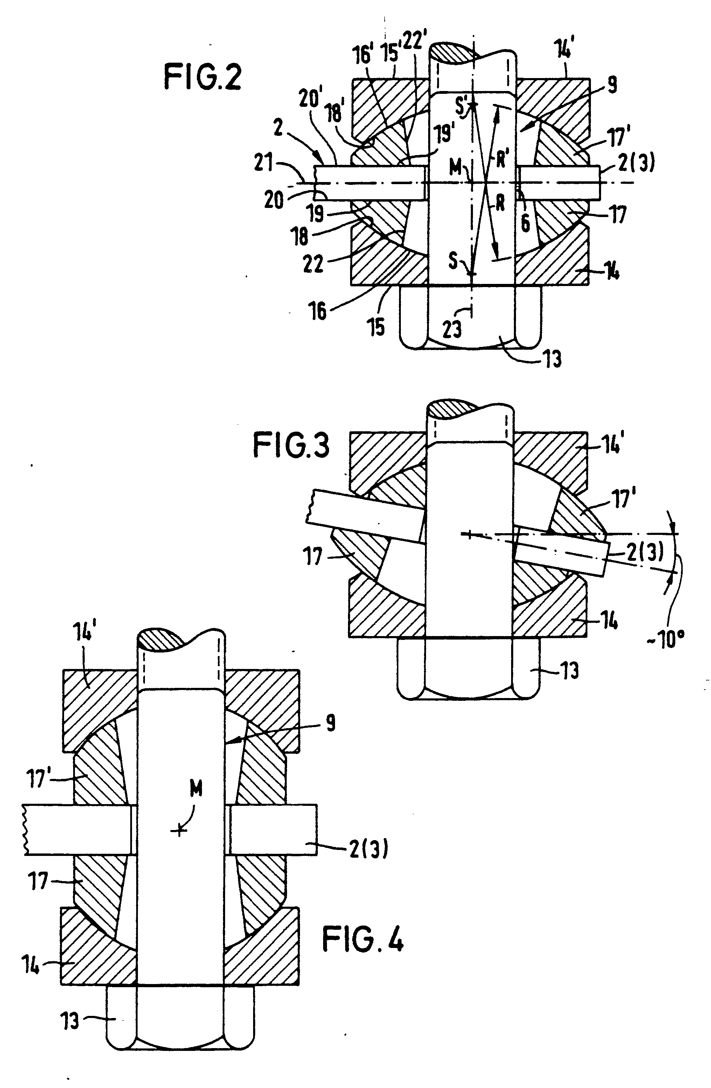

Der Darstellung der Figur 2 ist zu entnehmen, daß die Kugelsegmente 17 bzw. 17′ mit sich in Richtung der zugeordneten Kugelpfanne 14 bzw. 14′ konisch erweiternden Ausnehmungen 22 bzw. 22′ versehen sind, deren Durchmesser im jeweiligen verjüngten Bereich etwa ein Drittel größer ist als der Durchmesser des diese durchsetzenden Schraubenschaftes. Darüber hinaus ist der Figur zu entnehmen, daß der Kugelradius R bzw. R' der jeweiligen Kugelsegmente 17 bzw. 17' größer ist als der Abstand der Kugelscheitel S bzw. S' von dem den Kugelsegmenten 17 bzw. 17' zugeordneten Stützenbereich, ausgedrückt durch den in der Mittelebene 21 liegenden Mittelpunkt M.

Ausgehend von der grundsätzlichen Darstellung der baulichen Verhältnisse der Stütze im Bereich eines Stützenbefestigungspunktes in Figur 2 zeigt die Figur 3 ergänzend die kinematischen Veränderungen bei einer Verschwenkung der Stütze 1 und damit der Abwinklung 2 aus der in Figur 2 gezeigten, als nicht verschwenkte Position bezeichneten Stellung in eine um einen Winkel von etwa 10° verschwenkte Stellung. Beim Überführen in diese Stellung bewegen sich die beiden Kugelsegmente 17 und 17', deren Ausnehmungen 22 bzw. 22' in der nicht verschwenkten Stellung konzentrisch zur Schraubenlängsachse 23 angeordnet waren, gegensinnig, bis in der in Figur 3 gezeigten Endstellung gegenüberliegende Innenseiten der Kugelsegmente 17 bzw. 17' am Schraubenschaft anliegen. Während dieser Positionsveränderung gleiten aufgrund des gleichen Krümmungsradius die Kugelwölbungen 18 bzw. 18' der Kugelsegmente 17 bzw. 17' in den Kugelwölbungen 16 bzw. 16' der Kugelpfannen 14 bzw. 14' und die ebenen Flächen 19 bzw. 19' der Kugelsegmente 17 bzw. 17' auf den ebenen Flächen 20 bzw. 20' der Abwinklung 2. Die flache Krümmung der Kugelpfannen 14 bzw. 14' und der Kugelsegmente 17 bzw. 17' ermöglicht dabei eine flache Ausbildung der Stütze im Bereich des gezeigten Stützenbefestigungspunktes, wobei bei dieser Ausführung jedoch der Schwenkwinkel der Abwinklung 2 und damit der Stütze 1 beschränkt ist.

Entsprechend der zuvor für den Stützenbefestigungspunkt im Bereich der Abwinklung 2 beschriebenen Ausbildung des Kugelgelenkes ist auch der Stützenbefestigungspunkt im Bereich der Abwinklung 3 gestaltet, mit dem einzigen Unterschied, daß, wie zuvor beschrieben, die Ausnehmung als in Längsrichtung der Stütze verlaufendes Langloch 5 ausgebildet ist. Die Stütze 1 kann damit im Bereich der Abwinklung 3 nicht nur Kippbewegungen um den Schaft der Schraube 10 vollführen, sondern auch in der Mittelebene 21 in Längsrichtung des Langloches 5 verschoben werden. Die Darstellung der Figuren 2 und 3 ist damit entsprechend für die Verbindung der Stütze im Bereich deren Abwinklung 3 übertragbar.

Ist die Keilriemenspannung zum Antreiben des Generators nicht mehr ausreichend und muß daher der Keilriemen zur Aufrechterhaltung eines funktionsgerechten Antriebes des Generators nachgespannt werden, ist es nur erforderlich, die beiden Schrauben 9 und 10 so weit zu lösen, bis der Reibschluß der beiden Kugelgelenke aufgehoben wird. Es kann dann der Generator im Sinne einer erhöhten Anspannung des Keilriemens verschwenkt werden, beispielsweise in die in Figur 1 gezeigte ausgestellte Position, in dieser Position werden dann die beiden Schrauben 9 und 10 wieder angezogen, so daß der Generator in dieser Stellung axial gestützt verbleibt. Die Figur 1 verdeutlicht, daß bei einer Änderung der Generatorstellung die Stütze aufgrund des Zusammenwirkens der jeweiligen Abwinklung, der Kugelsegmente und der Kugelpfannen den Winkeländerungen folgen kann, das Langloch in der saugrohrseitigen Abwinklung ermöglicht den aufgrund der Verschwenkung der Stütze erforderlich werdenden Längenausgleich.

Figur 4 zeigt entsprechend der Darstellung in Figur 2 Kugelsegmente 17 bzw. 17' und Kugelpfannen 14 bzw. 14', deren Wölbungsradien in einem gemeinsamen Mittelpunkt M zusammenfallen und damit einen Schwenkwinkel der Stütze ermöglichen, der größer als 10° ist.

Bezugszeichenliste

1 Stütze
2 Abwinklung
3 Abwinklung
4 Stützenmittelteil
5 Langloch
6 Bohrung
7 Gehäuse
8 Saugrohr
9 Schraube
10 Schraube
11 Gewindebohrung
12 Gewindebohrung
13 Schraubenkopf
14, 14' Kugelpfanne
15, 15' ebener Abschnitt
16, 16' Kugelwölbung
17, 17' Kugelsegment
18, 18' Kugelwölbung
19, 19' ebene Fläche
20, 20' ebene Fläche
21 Mittelebene
22, 22' Ausnehmungen
23 Schraubenlängsachse

**Ansprüche**

1. Stütze zum Verbinden zweier zueinander bewegbarer Aggregate, insbesondere zum Verbinden eines Motorzusatzaggregates mit einem Verbrennungsmotor, wobei die Stütze zur Aufnahme von mit den Aggregaten verbindbaren Befestigungselementen im Bereich der Stützenbefestigungspunkte mit Ausnehmungen versehen ist und zwischen einem Kopf des jeweiligen Befestigungselementes und dem zugeordneten Aggregat verspannbar ist,

**dadurch gekennzeichnet,** daß die Stütze (1, 2, 3) im Bereich jedes Befestigungspunktes zwischen dem Kopf (13) des jeweiligen Befestigungselementes (9, 10) und der Stütze (2, 3) sowie der Stütze (2, 3) und dem jeweiligen Aggregat (7, 8) jeweils ein an der Stütze (2, 3) anliegendes Kugelsegment (17, 17') und eine am Kopf (13) bzw. dem Aggregat (7, 8) anliegende Kugelpfanne (14, 14') aufweist, wobei das jeweilige Kugelsegment (17, 17') auf seiner der zugeordneten Kugelpfanne (14, 14') zugewandten Seite mit einer zu dieser gerichteten Wölbung (18, 18'), die Kugelpfanne (14, 14') mit einer entsprechenden, von dem zugeordneten Kugelsegment (17, 17') weggerichteten Wölbung (16, 16') und die Kugelsegmente (17, 17') und die Kugelpfanne (14, 14') mit Ausnehmungen (22, 22'; -) zur Aufnahme des jeweiligen Befestigungselementes (9, 10) versehen sind, sowie die Ausnehmungen (22, 22') in den Kugelsegmenten (17, 17') größer sind als die Stärke des diese durchsetzenden Teiles des jeweiligen Befestigungselementes (9, 10) und die Stützenausnehmung (5) mindestens eines Stützenbefestigungspunktes in deren Längsrichtung größer ist als die Stärke des dieses durchsetzenden Teiles des jeweiligen Befestigungselementes (12).

2. Stütze nach Anspruch 1, **dadurch gekennzeichnet,** daß der Kugelradius (R, R') der jeweiligen Kugelsegmente (17, 17') größer ist als der Abstand der Kugelscheitel (S, S') von dem den Kugelsegmenten (17, 17') zugeordneten Stützenbereich (M).

3. Stütze nach Anspruch 1 oder 2, **dadurch gekennzeichnet,** daß die den gewölbten Flächen (18, 18', 16, 16') der Kugelsegmente (17, 17') und Kugelpfannen (14, 14') abgewandten Flächen (15, 15') dieser Teile eben ausgebildet sind, wobei die Ausnehmungen dieser Teile die jeweiligen gewölbten und ebenen Flächen senkrecht durchsetzen.

4. Stütze nach einem der Ansprüche 1 bis 3, **dadurch gekennzeichnet,** daß die Kugelsegmente (17, 17') mit sich in Richtung der zugeordneten Kugelpfannen (14, 14') konisch erweiternden Ausnehmungen (22, 22') versehen sind.

5. Stütze nach einem der Ansprüche 1 bis 4, **dadurch gekennzeichnet,** daß die Stützenausnehmung (5) im Bereich des mindestens einen Stützenbefestigungspunktes als Langloch (5) ausgebildet ist.

6. Stütze nach einem der Ansprüche 1 bis 5, **dadurch gekennzeichnet,** daß die Stütze (1, 2, 3) im Bereich mindestens eines Ende mit einer die jeweilige Ausnehmung (6) aufnehmenden Abwinklung (2) versehen ist, vorteilhaft mit einer Abwinklung von etwa 90 bis 110°, insbesondere 100°.

7. Stütze nach Anspruch 6, **dadurch gekennzeichnet,** daß die Stütze (1, 2, 3) im Bereich des anderen Endes mit einer die jeweilige Ausnehmung (5) aufnehmenden Abwinklung (3) vorgesehen ist, vorteilhaft mit einer Abwinklung von etwa 160 bis 170°, insbesondere 170°.

8. Stütze nach Anspruch 7, **dadurch gekennzeichnet,** daß die beiden Abwinklungen (2, 3) der Stütze (1, 2, 3) gegensinnig gerichtet sind.

FIG.1

FIG.2

FIG.3

~10°

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2587282 (GONZALEZ) <br> * Seite 7, Zeile 14 – Seite 9, Zeile 28 * <br> --- | 1 | F02B61/00 <br> F02B67/00 <br> F16B43/02 |
| Y | DE-A-3613692 (OPEL) <br> * Spalte 2, Zeile 4 – Spalte 4, Zeile 41 * | 1 | |
| A | | 2, 3, 4, 5, 6 | |
| A | DE-B-1012189 (ROSCHER) <br> --- | | |
| A | FR-A-1479138 (SAAB AKTIEBOLAG) <br> ----- | | |

| RECHERCHIERTE SACHGEBIETE (Int. Cl.5) |
|---|
| F02B <br> F16B |

Der vorliegende Recherchenbericht wurde für alle Patentansprüche erstellt

| Recherchenort | Abschlußdatum der Recherche | Prüfer |
|---|---|---|
| DEN HAAG | 19 APRIL 1990 | WASSENAAR G. |